# EUROPÄISCHE PATENTSCHRIFT

(11) **EP 2 361 792 B1**
(45) Veröffentlichungstag und Bekanntmachung des Hinweises auf die Patenterteilung: **18.04.2018**
(21) Anmeldenummer: 11154817.8
(22) Anmeldetag: 17.02.2011
(51) Int. Cl.: B60D 1/06

(54) **Anhängerkupplung**
Trailer tow-bar
Attelage

(30) Priorität: 18.02.2010 DE 202010000223 U
(43) Veröffentlichungstag der Anmeldung: 31.08.2011
(73) Patentinhaber: AL-KO Technology Austria GmbH, 6284 Ramsau im Zillertal (AT)
(72) Erfinder: Fischer, Petra, 89312 Günzburg (DE); Sailer, Wolfgang, 6290 Mayrhofen (AT); Wechselberger, Norbert, 6293 Tux (AT)
(74) Vertreter: Ernicke, Klaus Stefan

(56) Entgegenhaltungen:
- EP-A1- 0 695 654
- DE-U1- 8 030 400
- DE-U1-202005 011 444

## Beschreibung

Die Erfindung betrifft eine Anhängerkupplung mit den Merkmalen im Oberbegriff des Hauptanspruchs.

Eine solche Anhängerkupplung mit einer Anzeige für den Kupplungsverschleiss ist aus der DE 26 40 650 bekannt. Die Anhängerkupplung besitzt ein Kupplungsgehäuse, in dem ein Kupplungshebel schwenkbar gelagert ist, welcher eine Kupplungsschale kontaktiert und durch deren Beaufschlagung die Anhängerkupplung öffnet und schließt. Die Verschleissanzeige besteht aus einer mehrfarbigen Skala, die an der Seitenwand eines nach oben gewölbten Ansatzes des Kupplungsgehäuses angeordnet ist. Der Kupplungshebel trägt an einer Seitenwand einen Zeiger, der radial zum Schwenklager des Kupplungshebels ausgerichtet ist und der auf die Skala weist. Diese Anzeige ist relativ ungenau und hängt stark von den bestehenden Form- und Bearbeitungstoleranzen der Anhängerkupplung ab. Sie ist ferner dauernden Umgebungseinflüssen ausgesetzt und kann mit der Zeit ihre Anzeigewirkung verlieren.

Eine weitere gattungsgemäße Anhängerkupplung ist aus der DE 20 2005 011 444 U1 bekannt.

Aus der EP 0 695 654 A1 ist eine andere Kugelkopf-Anhängerkupplung mit einer Verschleissanzeige bekannt, bei der der schwenkbare Kupplungshebel von der Kupplungsschale entkoppelt ist und stattdessen ein zusätzliches schwenkbares Sperrteil betätigt, welches seinerseits auf die Kupplungsschale einwirkt. Durch diese Entkopplung kann in der Schließstellung der Anhängerkupplung der Kupplungshebel eine abgeschwenkte, niedrige Endlage einnehmen. Die Verschleissanzeige ist am Sperrteil angeordnet und besteht aus einem Signalkopf, der durch eine frontseitige Öffnung des Kupplungshebels ragt. Der Verschleiss wird durch die Relativstellung zwischen dem Signalkopf und der Hebelöffnung signalisiert. Auch hier bestehen erhebliche Toleranzeinflüsse.

Es ist Aufgabe der vorliegenden Erfindung, eine Anhängerkupplung mit einer besseren Anzeigemöglichkeit anzubieten.

Die Erfindung löst diese Aufgabe mit den Merkmalen im Hauptanspruch.
Die beanspruchte Anzeige bietet eine höhere Genauigkeit sowie eine geringere Toleranzabhängigkeit. Sie hat ferner einen höheren Anzeigeumfang. Insbesondere kann sie auch die Funktion einer Einrastanzeige übernehmen.

Die beanspruchte Anzeige bietet ferner den Vorteil eines verbesserten Verletzungsschutzes für den Bediener. Sie ist kostengünstig in der Herstellung und Montage. Sie kann bei Schäden ausgewechselt werden. Außerdem kann sie in Schließstellung und im Fahrbetrieb verborgen im Inneren des Kupplungsgehäuses untergebracht werden und unterliegt in einem geringeren Maß als bisher schädigenden Umwelteinflüssen.

Die Anzeige ist für den Bediener besser sichtbar und leichter nutzbar. Er kann die Anzeige insbesondere in der üblichen Bedienungsstellung und während der Bedienung mit Blick von oben auf die Anhängerkupplung wahrnehmen. Zudem kann sie mit ihrem gebogenen Anzeigenträger die bevorzugt oben liegende Gehäuseöffnung weitgehend verschließen und gegen Eindringen von Verschmutzungen schützen. Insbesondere sind hierbei Bedienfehler und Verletzungen weitgehend ausgeschlossen. Hierfür ist eine Anordnung der Anzeige an der Hebelrückseite und ggf. unterhalb eines Griffteils von Vorteil. Der vordere Bereich der Gehäuseöffnung kann für eine Verriegelung genutzt werden, die zugleich durch ihre Abdeckfunktion einen Verletzungs- und Verschmutzungsschutz bietet.

Neben der Anzeigengenauigkeit ist auch die Deutlichkeit und Wahrnehmbarkeit der mit der Anzeige vermittelten Information für den Benutzer besser. Insbesondere ist die Anzeige auch in der Öffnungsstellung der Anhängerkupplung präsent und auffällig, sodass sie auch von ungeübten Benutzern nicht übersehen werden kann. Sie vermittelt dem Benutzer eine Art Bedienerführung und gibt ihm eine größere Sicherheit, dass die Anhängerkupplung sich in einem betriebssicheren Zustand befindet und dass er außerdem die Anhängerkupplung korrekt bedient hat. Dies ist insbesondere in Verbindung mit der implementierten Einrastanzeige von Vorteil.

Die Anzeige kann mehrere unterschiedliche Anzeigeelemente aufweisen, die auch unterschiedliche Informationen transportieren können. Die Anzeigeelemente können in Abhängigkeit von der Drehstellung des Kupplungshebels und damit auch in Abhängigkeit von der Schließstellung der Kupplung und des bestehenden Verschleisses sichtbar werden. Die Anzeigeelemente bieten eine hohe Wahrnehmbarkeit und sind selbsterklärend. Auch ungeübten Benutzern ist ihre Bedeutung sofort klar. Der Informationsumfang der Anzeige ist dadurch nicht nur besser und deutlicher, sondern auch größer als bei vorbekannten Anzeigen.

Der Anzeigenträger kann bei korrekt geschlossener Anhängerkupplung zumindest bereichsweise durch die Gehäuseöffnung ragen, wobei die Anzeigeelemente von außen sichtbar sind und die jeweilige Information übermitteln. Wenn der Anzeigenträger nicht sichtbar ist, kann dies ebenfalls eine Information übermitteln, z.B. eine fehlerhaftes Schließen der Anhängerkupplung, insbesondere einen fehlenden Eingriff der Anhängerkupplung am Zugorgan, insbesondere am Kugelkopf.

Für die Ausgestaltung der Anzeigeelemente gibt es mehrere alternative oder kombinative Möglichkeiten, wobei z.B. mindestens ein Anzeigeelement als Beschriftung, insbesondere (OPEN), und mindestens ein anderes als Symbol, insbesondere als Keil oder als (+) und/oder (-) Zeichen, ausgebildet ist. Günstig ist auch eine farbige, insbesondere mehrfarbige Ausbildung.

In konstruktiver Hinsicht ist eine Ausbildung des Anzeigenträgers als Kunststoffteil günstig. Vorteilhafterweise haben ferner der Kupplungshebel und der Anzeigenträger formschlüssig ineinander greifende Verbindungselemente.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: eine Anhängerkupplung mit einer Anzeige in einer teilweise aufgebrochenen Seitenansicht,
- Figur 2:: eine perspektivische Ansicht eines Kupplungshebels,
- Figur 3:: eine perspektivische Ansicht eines Anzeigenträgers,
- Figur 4:: eine perspektivische Ansicht der Anhängerkupplung in Schließstellung bei ordnungsgemäßem Zustand,
- Figur 5:: eine vergrößerte Ansicht des Details V von Figur 4,
- Figur 6:: eine perspektivische Ansicht der geschlossenen Anhängerkupplung bei beginnendem Verschleiss,
- Figur 7:: eine vergrößerte Ansicht des Details VII von Figur 6,
- Figur 8:: eine geschlossene Anhängerkupplung im verschlissenen Zustand,
- Figur 9:: eine vergrößerte Ansicht des Detailauschnitts IX von Figur 8,
- Figur 10:: eine perspektivische Ansicht der Anhängerkupplung in Öffnungsstellung und
- Figur 11:: eine vergrößerte Ansicht des Ausschnitts XI von Figur 10.

Die Erfindung betrifft eine Anhängerkupplung (1) mit einer Anzeige (2), die den Verschleisszustand und/oder das korrekte Einrasten der Anhängerkupplung (1) auf dem Zugorgan einem Benutzer anzeigt.

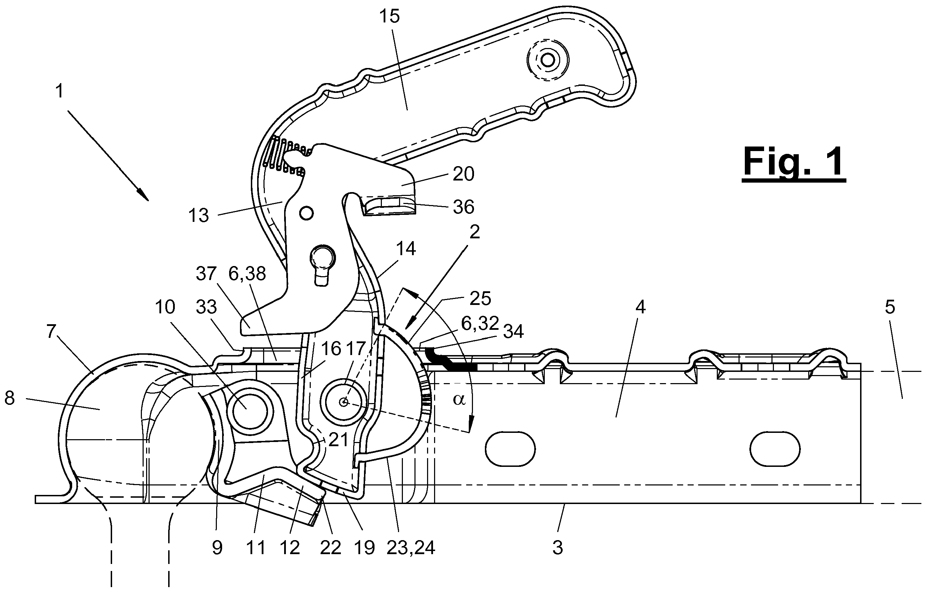

Die in Figur 1 in ihren Bestandteilen dargestellte Anhängerkupplung (1) ist zum Anbau an Anhänger vorgesehen und ist insbesondere als Kugelkopf-Anhängerkupplung ausgebildet. Sie wirkt zusammen mit einem am Zugfahrzeug angeordneten Zugorgan, welches beispielsweise als Kugelkopf (8) ausgebildet ist. Figur 1 zeigt die Schließstellung.

Die Anhängerkupplung (1) weist ein Kupplungsgehäuse (3) auf, welches an der Vorderseite eine kugelabschnittsförmige Kalotte (7) zur Aufnahme des Kugelkopfs (8) und am rückwärtigen Bereich einen Schaft (4) zur Verbindung mit einem Anhängerteil (5) aufweist. Das Anhängerteil (5) kann bei ungebremsten Anhängern z.B. ein Deichselteil einer V- oder Rohrdeichsel sein. Bei gebremsten Anhängern mit einer Auflaufbremse kann das Anhängerteil (5) z.B. eine Auflaufstange oder ein anderes Auflauf- oder Messorgan sein.

Der Schließmechanismus der Anhängerkupplung (1) umfasst zum einen einen handbedienbaren Kupplungshebel (13), der beweglich am Kupplungsgehäuse (3) gelagert ist und mit dem die Anhängerkupplung (1) geöffnet und geschlossen wird. Der Kupplungshebel (13) ist im gezeigten Ausführungsbeispiel um ein Lager (17) mit einer quer zum Gehäuse ausgerichteten Achse (18) an den Gehäuseseitenwänden schwenkbar gelagert. Er besitzt z.B. eine abgewinkelte Form mit einem Griff (15) an der Oberseite und einem daran anschließenden und sich nach unten erstreckenden Hebelschaft (16), der eine im wesentlichen gerade oder gestreckte Form hat und der auch das Lager (17) trägt. Unterhalb des Lagers (17) weist der Hebelschaft (16) einen Fortsatz (19) auf, der an der Unterseite eine Auflauffläche besitzt. An der Schaftvorderseite kann eine Rastöffnung (21) am Fortsatz (19) angeordnet sein.

Der Schließmechanismus umfasst ferner eine Kupplungsschale (9), die über eine ebenfalls quer gerichtete Achse und ein Lager (10) im Kupplungsgehäuse (3) schwenkbar gelagert ist. Sie weist eine kalottenförmige bzw. gewölbte und an den Kugelkopf (8) angepasste Vorderseite auf, welche in Schließstellung gegen den Kugelkopf (8) gepresst wird. Im rückwärtigen Bereich besitzt die Kupplungsschale (9) einen abstehenden Ansatz (11), der an der Oberseite eine Anlauffläche (12) aufweist, die mit dem Fortsatz (19) am Kupplungshebel (13) zusammenwirkt. Am Ansatz (11) kann auch ein Vorsprung (22) angeordnet sein, der in Öffnungsstellung der Anhängerkupplung (1) an der Rastöffnung (21) einrastet. Die Zuordnung der Rastelemente kann auch umgekehrt sein.

Die Kupplungsschale (9) kann ein rückstellendes Element, z.B. eine Rückstellfeder (nicht dargestellt), aufweisen, die sich bei Nichtbeaufschlagung durch den Kupplungshebel (13) in die Öffnungsstellung zwingt. Zum Schließen der Anhängerkupplung (1) gleitet der Fortsatz (19) bei einer abwärts gerichteten Schwenkbewegung des Kupplungshebels (13) bzw. Griffs (15) auf der Auflauffläche (12) auf und drückt die Kupplungsschale (9) gegen den Kugelkopf (8). Die Schließstellung kann selbsthemmend sein.

Der Kupplungshebel (13) ragt mit seinem Schaft (16) durch eine Öffnung (6) an der Oberseite des Kupplungsgehäuses (3). Die Gehäuseöffnung (6) kann von einem nach oben gerichteten Kragen (33) der Gehäusewandung randseitig umschlossen sein.

Ferner kann eine in Figur 1 dargestellte federbelastete (38) Verriegelung (20) im Innenraum des Kupplungshebels (13) vorhanden sein, die teilweise (36,37) aus dem Kupplungshebel (13) herausragt und die zum Öffnen und Hochschwenken des Kupplungshebels (13) betätigt werden muss. Die z.B. schwenkbare Verriegelung (20) kann ein am Griff (15) angeordnetes externes Betätigungsteil (36) und eine an der Hebelvorderseite angeordnete externe Anschlagnase (37) aufweisen, die einen vorderen Bereich (39) der Öffnung (6) übergreift und in Sperrstellung am Kragen (33) anschlägt und dadurch die Hebelöffnung verhindert. Die Verriegelung (20) stützt das Reaktionsmoment ihrerseits am Kupplungshebel (13) ab. Die Anschlagnase (37) deckt den Öffnungsbereich (39) weitgehend ab und bildet Zugriffs- und Verletzungsschutz. Bei einer Entriegelung wird die Anschlagnase (37) zurückgedreht und kann bei der frei gegebenen Hebeldrehung in den Gehäuseinnenraum eintauchen.

Die Anzeige (2) weist mindestens einen mit dem Kupplungshebel (13) verbundenen und bei dessen Schwenkbewegungen mitbewegten Anzeigenträger (23) auf. ist im Bereich der Gehäuseöffnung (6) angeordnet. Er befindet sich vorzugsweise an der Rückseite (14) des Kupplungshebels (13) und bewegt sich im rückwärtigen Öffnungsbereich (32). Der Anzeigenträger (23) ist vorzugsweise an der Rückseite (14) des Hebelschafts (16) und ggf. unterhalb des abgewinkelten Griffs (15) angeordnet. Der rückwärtige Öffnungsbereich (32) kann in seiner Form an die Kontur des Anzeigenträgers (23) angepasst sein und nahe an diesen heranreichen.

Der Anzeigenträger (23) signalisiert den Verschleissgrad der Anhängerkupplung (1). Er kann alternativ oder zusätzlich die Öffnungsstellung der Anhängerkupplung (1) signalisieren. Er weist hierfür ein oder mehrere Anzeigeelemente (26,27,28,29) auf. Diese können eine unterschiedliche Gestaltung haben. Sie können auch unterschiedliche Bedeutungsinhalte haben.

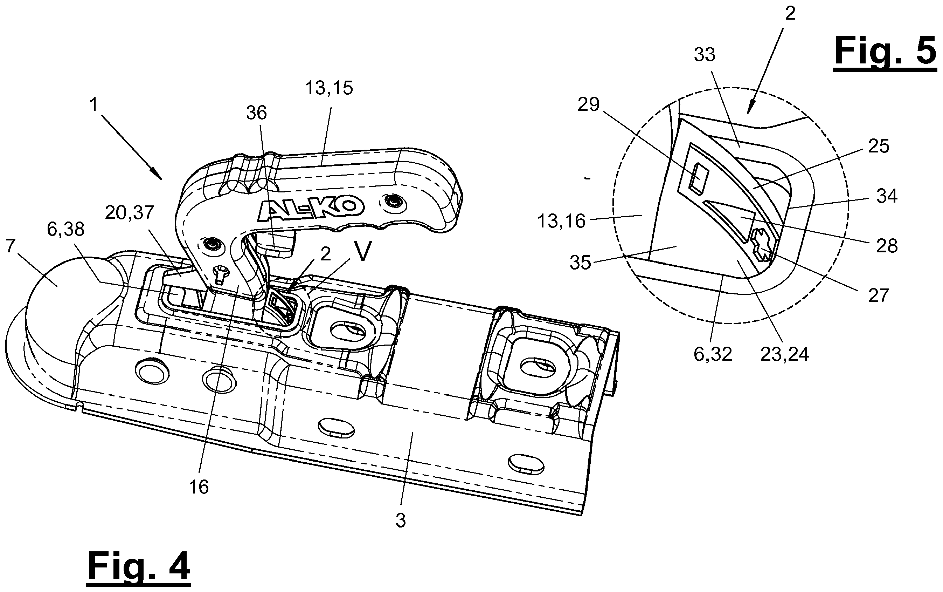

Der mit dem Kupplungshebel (13) bewegliche Anzeigenträger (23) wirkt mit dem eng benachbarten Rand der Gehäuseöffnung (6), insbesondere des hinteren Öffnungsbereichs (32), zusammen. Der rückwärtige Rand (34) bildet eine Bezugslinie oder Sichtkante. Hierbei sind je nach Drehstellung des Kupplungshebels (13) ein oder mehrere Anzeigeelemente (26,27,28,29) oberhalb dieses Rands (34) sichtbar. Dies wird nachfolgend in Verbindung mit den Figuren 4 bis 11 näher erläutert.

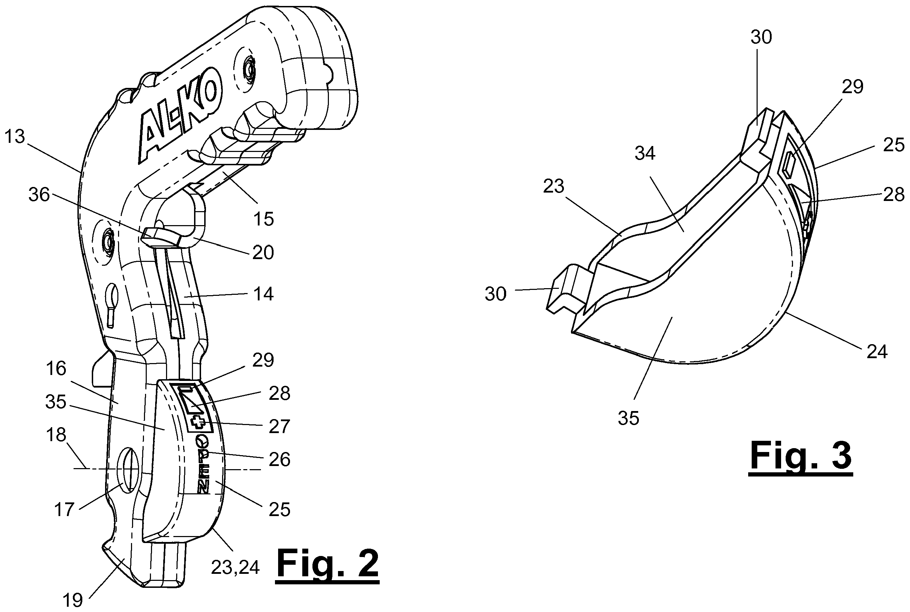

Figur 1 und 2 zeigen die Zuordnung des Anzeigenträgers (23) zum Kupplungshebel (13). In Figur 3 ist der Anzeigenträger (23) perspektivisch dargestellt.

Der Anzeigenträger (23) besitzt eine gebogene Form. Er kann hierfür als Bogenstück (24) ausgebildet sein, das am Hebelschaft (16) angeordnet ist und sich dabei bevorzugt im Bereich seiner Achse (18) befindet. Der Anzeigenträger (23) bzw. das Bogenstück (24) sind zumindest bereichsweise konzentrisch zur Achse (18) gebogen. Hierbei ist insbesondere der Bogenbereich (25), der am Umfang die Anzeigeelemente (26,27,28,29) trägt, konzentrisch zur Achse (18) gebogen. Der Bogenbereich (25) bzw. der zugehörige Winkel α in Figur 1 beträgt z.B. 60 - 80°, insbesondere ca. 70°. Dies kann im Wesentlichen der mögliche Betätigungs- und Schwenkwinkel des Kupplungshebels (13) sein. Während des gesamten Betätigungswegs kann eine Anzeigeinformation sichtbar sein.

Das Bogenstück (24) kann eine Streifenform haben. Im gezeigten Ausführungsbeispiel sind beidseits Seitenwände (35) vorgesehen, wodurch der Anzeigenträger (23) eine seitlich geschlossene Schalenform erhält und an die seitlichen Öffnungsränder nahe heranreicht. Die Seitenwände (35) haben am freien Ende eine dem Hebelschaft (16) entsprechende Kontur, sodass der Anzeigenträger (23) an der Hebelrückseite (14) dicht anliegen kann.

Das Bogenstück (24) und insbesondere der konzentrische Bogenbereich (25) sind nahe am rückwärtigen Rand (34) angeordnet. Hierbei besteht nur ein schmaler Spalt, der zu klein für Finger ist und der die Verletzungs- und Verschmutzungsgefahr mindert. Die Spaltweite bleibt durch die konzentrische Bogenform bei den Hebelbewegungungen im Wesentlichen gleich. Das Gleiche gilt für den schmalen seitlichen Spalt an den Seitenwänden (35).

Der Anzeigenträger (23) kann als Kunststoffteil oder in anderer geeigneter Weise ausgebildet sein. Er kann mit dem Kupplungshebel (13) in beliebig geeigneter Weise verbunden werden. Im gezeigten Ausführungsbeispiel weisen der Kupplungshebel (13) und der Anzeigenträger (23) formschlüssig ineinander greifende Verbindungselemente (30,31) auf. Am Anzeigenträger (23) sind hierfür z.B. randseitig Verbindungselemente (30) in Form von seitlich abgewinkelten Haken angeordnet, wobei der Kupplungshebel (13) hierzu passende Verbindungselemente (31) in Form von Aufnahmeöffnungen aufweist. Der Kupplungshebel (13) kann längs geteilt sein und aus zwei Schalenhälften bestehen. In deren schlitzartige Aufnahmeöffnungen (31) können die Haken (30) eingelegt werden, wobei die Verbindung beim anschließenden Vernieten der Schalenhälften fixiert wird. Die Haken (30) sorgen für eine formschlüssige Fixierung.

Wie Figur 2 verdeutlicht, können die Anzeigeelemente (26,27,28,29) unterschiedlich ausgebildet sein. Sie sind bevorzugt als optische Anzeigeelemente konzipiert und haben unterschiedliche Bedeutungsinhalte. Mindestens ein Anzeigeelement (26) kann als Beschriftung ausgebildet sein. Mindestens ein anderes Anzeigeelement (27,28,29) kann als Symbol ausgeführt sein. Ferner sind farbige Ausbildungen der Anzeigeelemente (26,27,28,29) und im weiteren Farbunterschiede zur Signalisierung unterschiedlicher Bedeutungsinhalte möglich.

Das eine und im gezeigten Ausführungsbeispiel untere Anzeigeelement (26) ist z.B. als Beschriftung ausgeführt. Es kann z.B. die Öffnungsstellung des Kupplungshebels (13) signalisieren. Der Schriftzug kann (OPEN) oder anders lauten. Die Buchstaben können in einer Reihe übereinander angeordnet sein.

Das in Richtung nach oben nächstfolgende Anzeigeelement (27) kann den normalen und verschleissfreien Betriebszustand signalisieren. Es kann als Symbol, insbesondere als (+)-Zeichen ausgeführt sein.

Das nächsthöhere Anzeigeelement (28) kann bestehenden Verschleiss der Anhängerkupplung (1) signalisieren. Es kann dabei auch den Verschleissgrad angeben, wobei es als ein entsprechend geeignetes Symbol ausgebildet sein kann. In der gezeigten Form hat das Anzeigeelement (28) eine dreieckige Keilform, die sich von einer breiten Basis nach oben verjüngt. Verschleiss an der Anhängerkupplung (1) kann sowohl an der Kupplungsschale (9) und/oder der Kalotte (7), als auch an der Kupplungskugel (8) entstehen. Der Verschleiss kann z.B. in Form von Abrieb vorliegen. Die Kupplungsschale (9) und/oder die Kalotte (7) können an den Kontaktstellen zur Kupplungskugel (8) Reibflächen aufweisen, die mit der Zeit einem Abtrag unterliegen.

Das oberste Anzeigeelemente (29) kann eine nicht mehr tolerierbare Verschleisssituation signalisieren und hierfür eine entsprechende Ausbildung haben. Sie ist z.B. als Symbol, insbesondere als (-)-Zeichen ausgeführt und kann auch farblich, z.B. in roter Farbe, abgesetzt sein. Die anderen Anzeigeelemente (27,28) können demgegenüber in neutraler Farbe oder auch z.B. in Grün gehalten sein.

Die Anzeigeelemente (26,27,28,29) können in beliebiger Weise auf dem Umfang des gebogenen Anzeigenträgers (23) appliziert sein. Sie können z.B. aufgedruckt oder angeformt bzw. eingeformt sein. Eine plastische Formgebung wie in der gezeigten Art erhöht die Wahrnehmbarkeit und die Dauerhaftigkeit der Anzeigeelemente.

Figur 4 zeigt eine normale Betriebsstellung der Anhängerkupplung (1) ohne Verschleiss. In der dargestellten Schließstellung der Anhängerkupplung (1) hat die Kupplungsschale (9) früh sperrenden Kontakt mit der Kupplungskugel (8), sodass der Kupplungshebel (13) nicht weit abgeschwenkt werden kann. Dementsprechend ist die Eintauchtiefe des Anzeigenträgers (23) relativ klein. Hierdurch ist oberhalb der Gehäuseöffnung (6,32) und ihres Kragens (33) das Anzeigeelement (27) sichtbar. Durch die starke Annäherung des Bogenabschnitts (25) und des Anzeigeelements (27) an dem benachbarten Kragenrand (34) ist die Signalzuordnung leicht und deutlich zu erkennen. Der üblicherweise seitlich und hinter der Anhängerkupplung (1) stehende Bediener kann die unterhalb des Griffes (15) und an der Schaftrückseite befindliche Anzeige (2) gut und deutlich mit Sicht von schräg oben erkennen. Das Anzeigeelement (27) kann dem Bediener auch das korrekte Einrasten der Anhängerkupplung (1) auf dem Kugelkopf (8) signalisieren. Hierauf wird später noch eingegangen.

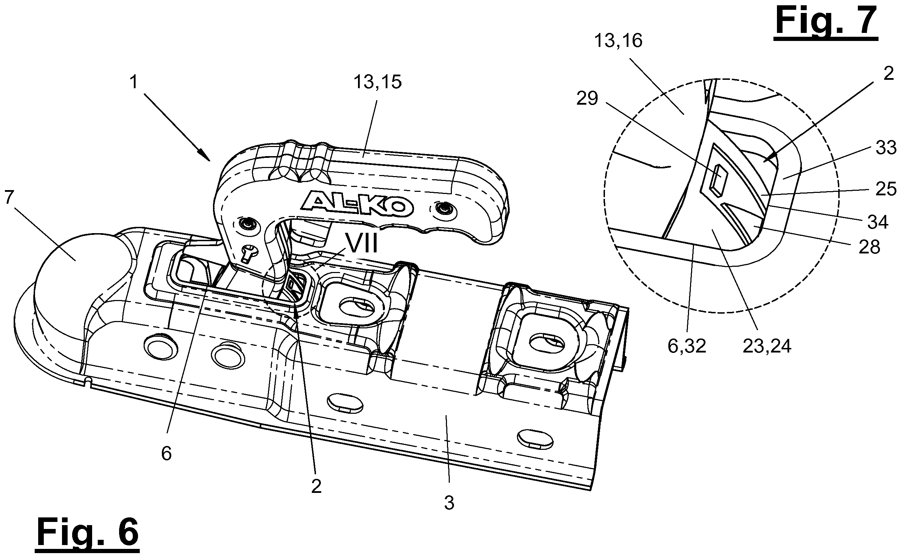

Figur 6 und 7 verdeutlichen den Zustand bei beginnendem Verschleiss. Verschleissbedingt kann in der Schließstellung der Kupplungshebel (13) weiter nach unten drehen und die Kupplungsschale (9) stärker in Richtung zum Kugelkopf (8) hin bewegen. Dementsprechend größer ist die Eintauchtiefe des Anzeigenträgers (23) im hinteren Öffnungsbereich (32). Das Anzeigeelement (27) verschwindet nun, wobei im Bereich des Öffnungs- bzw. Kragenrandes (34) das nächste Anzeigeelement (28) für die Verschleissanzeige erscheint. Die Keilform signalisiert dabei optisch den Verschleissgrad. Je größer der Verschleiss ist, desto größer wird die Eintauchtiefe und desto kürzer und schmäler wird der sichtbare Keilbereich.

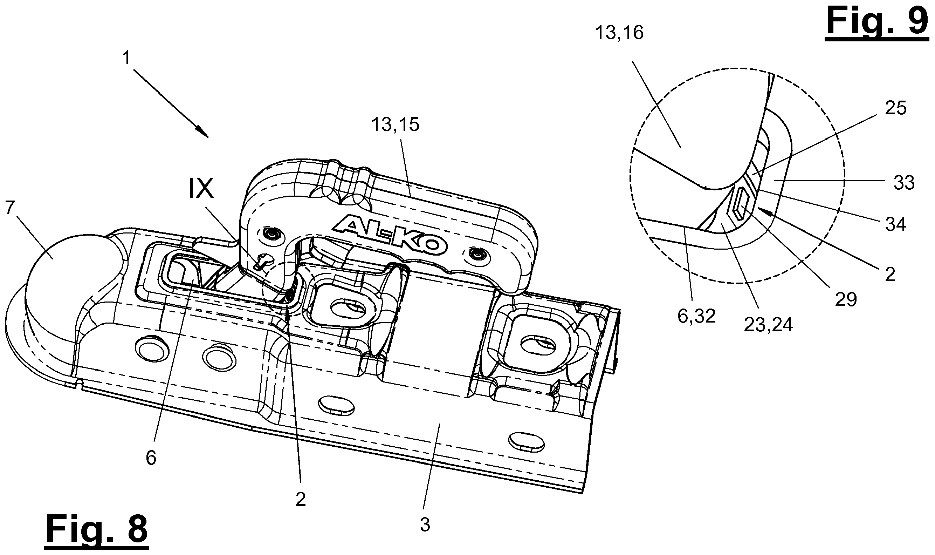

Figur 8 und 9 verdeutlichen einen verschlissenen Zustand der Anhängerkupplung (1), der nicht mehr fahrtauglich ist. Verschleissbedingt ist der Zuspannweg und der Abschwenkwinkel des Kupplungshebels (13) maximal, sodass nun auch das Anzeigeelement (28) für den noch tolerablen Verschleissgrad verschwunden ist und nur noch das letzte Anzeigeelement (29) sichtbar ist, welches ein Warnsymbol darstellt. Der Bediener ist dann gehalten, die Anhängerkupplung (1) und/oder den Kugelkopf (8) überprüfen und ggf. reparieren zu lassen.

Wenn sich kein Kugelkopf (8) in der Aufnahmeöffnung des Kupplungsgehäuses (3) befindet und für die Wegbewegung des Kupplungshebels (13) und der Kupplungsschale (9) kein Widerstand besteht, kann der Anzeigenträger (23) noch tiefer in den rückwärtigen Öffnungsbereich (32) auch eintauchen, sodass keines der Anzeigeelemente mehr sichtbar ist und der Hebelschaft (16) ggf. sogar am hinteren Öffnungsrand (34) anschlägt. Ein solcher Zustand kann eine Anzeige dafür sein, dass die Anhängerkupplung (1) nicht korrekt auf der Kupplungskugel (8) eingerastet ist oder dass die Kupplungskugel (8) einen maximalen Defekt hat und völlig unbrauchbar ist. Beides betrifft die Fahrsicherheit des Gespanns in höchstem Maße und zwingt zur Überprüfung der Kupplung- und Gerätesituation.

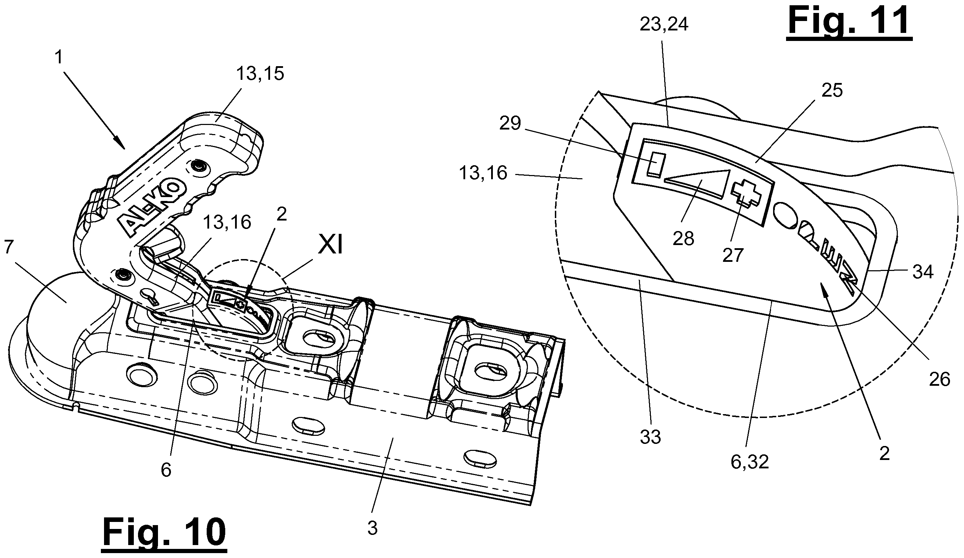

Figur 10 und 11 zeigen die Öffnungsstellung der Anhängerkupplung (1) mit hochgeschwenktem Kupplungshebel (13). In dieser Situation ist der Anzeigenträger (23) maximal aus dem rückwärtigen Öffnungsbereich (32) aufgetaucht, sodass auch das unterste Anzeigeelement (26), z.B. die Beschriftung (OPEN) sichtbar ist. Hierdurch wird dem Bediener die Öffnungsstellung signalisiert. Die Öffnungsstellung kann in der vorerwähnten Weise durch die gegenseitige Verrastung des Kupplungshebels (13) und der Kupplungsschale (9) gehalten werden.

Wenn der Bediener aus dieser Öffnungsstellung heraus den Kupplungshebel (13) abwärts schwenkt, verschwindet bei korrekter Ankupplungssituation das Anzeigeelement (26) im rückwärtigen Öffnungsbereich (32) vollständig, sodass über dem als Anzeigelinie dienenden hinteren Öffnungs- oder Kragenrand (34) nur die anderen Anzeigeelemente (27,28,29) sichtbar sind. Dies entspricht der Anzeigesituation von Figur 4 und 5. Der Bediener kann dann auch sicher sein, dass die Anhängerkupplung (1) korrekt auf der Kupplungskugel (8) eingerastet ist.

Sollte keine korrekte Einrastung vorliegen, lässt sich die Anhängerkupplung (1) je nach Auflagesituation auf der Kupplungskugel (8) nicht in die gezeigte Position von Figur 4 und 5 bringen. Ggf. stößt die gewölbte Kupplungsschale (9) mit ihrem unteren vorstehenden Rand frühzeitig an der Kupplungskugel (8) an, sodass das Anzeigeelement (26) nicht vollständig verschwindet. Es bleiben ein oder mehrere Teile davon, insbesondere Buchstaben, lesbar. Dies ist für den Bediener ein Hinweis auf die fehlerhafte Einrast- und Ankuppelsituation. In anderen Fällen kann der Schwenk- und Zuspannweg übermäßig groß sein, sodass die eingangs erwähnte Anzeigesituation für die fehlerhafte Ankuppelstellung entsteht.

Abwandlungen der gezeigten und beschriebenen Ausführungsform sind in verschiedener Weise möglich. Außer für Kupplungskugeln (8) kann die Anhängerkupplung auch an andere Arten und Formen von Kuppelelementen angepasst und in ihrer Konstruktion entsprechend ausgelegt werden. Der mitbewegte Anzeigenträger (23) kann sich alternativ an der Vorderseite des Kupplungshebels (13) und insbesondere seines Hebelschafts (16) befinden. Desgleichen ist es möglich, einen entsprechend anderen und als runde Scheibe ausgebildeten Anzeigenträger an ein oder beiden Seitenwänden des Kupplungshebels (13), insbesondere Hebelschafts (16), anzubringen. Eine derartige Anzeigescheibe kann in eine entsprechende schlitzförmige Öffnung an der Gehäuseoberseite eintauchen. Die Anzeigeelemente können bei einer Scheibe an der Stirnseite statt am Umfang angeordnet sein. Ferner kann die Zahl und Ausbildung der Anzeigeelemente (26,27,28,29) variieren. Auf eine Öffnungsanzeige kann verzichtet werden, insbesondere wenn eine andere Einrastanzeige vorhanden und z.B. an der Kalotte (7) angeordnet ist. Eine solche Einrastanzeige kann z.B. wie in der EP 0 695 654 A1 ausgebildet sein. Die Verschleissanzeige kann auf ein einzelnes Anzeigeelement reduziert werden, welches z.B. durch seine Form, insbesondere eine Keilform, und/oder seine Farbgebung, z.B. einen Farbverlauf oder einen Farbwechsel, den Verschleissgrad und den kritischen Verschleissbereich signalisiert.

Ferner sind konstruktive Änderungen der Anhängervorrichtung (1) und ihrer Bestandteile möglich. Der Kupplungshebel (13) kann eine andere Kinematik und Lagerung haben, wobei er z.B. heb- und senkbar gehalten ist. Dementsprechend ändert sich die Anordnung und Formgebung des Anzeigenträgers. Die Kupplungsschale (9) kann in ihrer Formgebung und Kinematik entsprechend angepasst sein und kann z.B. ein Schiebeteil darstellen. Alternativ kann der Kupplungshebel (13) auch eine andere Formgebung haben. Er kann z.B. eine gerade Form haben und/oder ggf. eine Grifföffnung am oberen Schaftende aufweisen.

Die Anhängerkupplung (1) kann weitere Bestandteile aufweisen, die im gezeigten Ausführungsbeispiel nicht dargestellt sind. Dies kann z.B. eine zusätzliche Reibkupplung mit seitlichen Reibstößeln sein, mit der die Schlinger- und Schleuderneigung eines Anhängers reduziert werden kann. Ferner kann eine Diebstahlsicherung vorhanden sein. Dies kann insbesondere ein Schloss, aber auch eine andere zusätzliche Mechanik sein.

### BEZUGSZEICHENLISTE

- 1: Anhängerkupplung
- 2: Anzeige, Verschleiß- und Einrastanzeige
- 3: Kupplungsgehäuse
- 4: Schaft
- 5: Anhängerteil, Deichsel, Auflaufstange
- 6: Öffnung, Gehäuseöffnung
- 7: Kalotte
- 8: Kugelkopf
- 9: Kupplungsschale
- 10: Lager
- 11: Ansatz
- 12: Anlauffläche
- 13: Kupplungshebel
- 14: Rückseite
- 15: Griff
- 16: Hebelschaft
- 17: Lager
- 18: Achse
- 19: Fortsatz
- 20: Verriegelung
- 21: Rastöffnung
- 22: Vorsprung
- 23: Anzeigenträger
- 24: Bogenstück, Schale
- 25: Bogenabschnitt
- 26: Anzeigeelement, Beschriftung, Öffnungsstellung
- 27: Anzeigeelement, Symbol, OK-Anzeige
- 28: Anzeigeelement, Symbol, Verschleißgrad
- 29: Anzeigeelement,Symbol, Warnhinweis
- 30: Verbindungselement, Haken
- 31: Verbindungselement, Aufnahmeöffnung
- 32: rückwärtiger Öffnungsbereich
- 33: Kragen, Gehäusekragen
- 34: Rand, Bezugskante
- 35: Seitenwand
- 36: Betätigungsteil
- 37: Anschlagnase
- 38: vorderer Öffnungsbereich

- ∝: Schwenkwinkel

## Patentansprüche

1. Anhängerkupplung mit einem Kupplungsgehäuse (3), einem schwenkbaren Kupplungshebel (13) und einer Anzeige (2) für den Kupplungsverschleiß, wobei der durch eine Gehäuseöffnung (6) an der Oberseite des Kupplungsgehäuses (3) ragende Kupplungshebel (13) eine Kupplungsschale (9) kontaktiert und durch deren Beaufschlagung die Anhängerkupplung (1) öffnet und schließt, **dadurch gekennzeichnet, dass** die Anzeige (2) einen mit dem Kupplungshebel (13) verbundenen und bei dessen Schwenkbewegungen mitbewegten Anzeigenträger (23) aufweist, der im Bereich der Gehäuseöffnung (6) angeordnet ist, wobei der Anzeigenträger (23) als Bogenstück (24) ausgebildet ist, das an der Rückseite (14) eines Hebelschafts (16) im Bereich der Achse (18) des Kupplungshebels (13) angeordnet ist.

2. Anhängerkupplung nach Anspruch 1, **dadurch gekennzeichnet, dass** der Anzeigenträger (23) ein oder mehrere Anzeigeelemente (26,27,28,29) trägt, die den Verschleißgrad und/oder die Öffnungsstellung der Anhängerkupplung (1) signalisieren.

3. Anhängerkupplung nach Anspruch 1 oder 2, **dadurch gekennzeichnet, dass** der Anzeigenträger (23) bei korrekt geschlossener Anhängerkupplung (1) zumindest bereichsweise durch die Gehäuseöffnung (6) ragt.

4. Anhängerkupplung nach Anspruch 1, 2 oder 3, **dadurch gekennzeichnet, dass** die Anzeigeelemente (26,27,28,29) unterschiedlich ausgebildet sind und/oder unterschiedliche Bedeutungsinhalte haben.

5. Anhängerkupplung nach einem der vorhergehenden Ansprüche, **dadurch gekennzeichnet, dass** der Anzeigenträger (23) mit dem Rand (34) der Gehäuseöffnung (6) zusammenwirkt, wobei je nach Drehstellung des Kupplungshebels (13) ein oder mehrere Anzeigeelemente (26,27,28,29) sichtbar sind.

6. Anhängerkupplung nach einem der vorhergehenden Ansprüche, **dadurch gekennzeichnet, dass** der Anzeigenträger (23) von einem rückwärtigen Öffnungsbereich (32) eng umgeben ist, wobei die Gehäuseöffnung (6), insbesondere ein rückwärtiger Öffnungsbereich (32) einen hochstehenden Kragen (33) aufweist.

7. Anhängerkupplung nach einem der vorhergehenden Ansprüche, **dadurch gekennzeichnet, dass** der Anzeigenträger (23) zumindest bereichsweise konzentrisch zur Achse (18) des Kupplungshebels (13) gebogen ist, wobei insbesondere der Bogenbereich (25) mit den Anzeigeelementen (26,27,28,29) konzentrisch zur Achse (18) des Kupplungshebels (13) gebogen ist.

8. Anhängerkupplung nach einem der vorhergehenden Ansprüche, **dadurch gekennzeichnet, dass** der Anzeigenträger (23) eine seitlich geschlossene Schalenform aufweist und an der Hebelrückseite (14) anliegt.

9. Anhängerkupplung nach einem der vorhergehenden Ansprüche, **dadurch gekennzeichnet, dass** der Kupplungshebel (13) unterhalb der Achse (18) einen Fortsatz (19) aufweist, der mit einer Auflauffläche (12) an der schwenkbar gelagerten (10) Kupplungsschale (9) zusammenwirkt.

10. Anhängerkupplung nach einem der vorhergehenden Ansprüche, **dadurch gekennzeichnet, dass** der Kupplungshebel (13) eine Verriegelung (20) gegen unbeabsichtigtes Öffnen aufweist.

11. Anhängerkupplung nach einem der vorhergehenden Ansprüche, **dadurch gekennzeichnet, dass** der Kupplungshebel (13) und die federbelastete Kupplungsschale (9) in der Öffnungsstellung der Anhängerkupplung (1) verrastbar sind.

12. Anhängerkupplung nach einem der vorhergehenden Ansprüche, **dadurch gekennzeichnet, dass** die Kupplungsschale (9) einen Ansatz (11) aufweist, der in Öffnungsstellung mit einer Rastöffnung (21) am Kupplungshebel (13) zusammenwirkt.

## Claims

1. Trailer coupling with a coupling housing (3), a pivotable coupling lever (13) and a display (2) for the wear of the coupling, wherein the coupling lever (13) projecting through a housing opening (6) on the upper side of the coupling housing (3) makes contact with a coupling shell (9) and, by acting upon the latter, opens and closes the trailer coupling (1), **characterized in that** the display (2) has a display carrier (23) which is connected to the coupling lever (13) and moves together with the pivoting movements thereof and is arranged in the region of the housing opening (6), wherein the display carrier (23) is designed as a curved piece (24) which is arranged on the rear side (14) of a lever shaft (16) in the region of the axis (18) of the coupling lever (13).

2. Trailer coupling according to Claim 1, **characterized in that** the display carrier (23) bears one or more display elements (26, 27, 28, 29) which signal the degree of wear and/or the open position of the trailer coupling (1).

3. Trailer coupling according to Claim 1 or 2, **characterized in that**, when the trailer coupling (1) is correctly closed, the display carrier (23) projects at least in regions through the housing opening (6).

4. Trailer coupling according to Claim 1, 2 or 3, **characterized in that** the display elements (26, 27, 28, 29) are of differing design and/or have different meanings.

5. Trailer coupling according to one of the preceding claims, **characterized in that** the display carrier (23) interacts with the edge (34) of the housing opening (6), wherein one or more display elements (26, 27, 28, 29) is or are visible depending on the rotational position of the coupling lever (13).

6. Trailer coupling according to one of the preceding claims, **characterized in that** the display carrier (23) is narrowly surrounded by a rear opening region (32), wherein the housing opening (6), in particular a rear opening region (32), has a protruding collar (33).

7. Trailer coupling according to one of the preceding claims, **characterized in that** the display carrier (23) is curved concentrically with respect to the axis (18) of the coupling lever (13) at least in regions, wherein in particular the curved region (25) with the display elements (26, 27, 28, 29) is curved concentrically with respect to the axis (18) of the coupling lever (13).

8. Trailer coupling according to one of the preceding claims, **characterized in that** the display carrier (23) has a laterally closed shell shape and lies against the rear side (14) of the lever.

9. Trailer coupling according to one of the preceding claims, **characterized in that** the coupling lever (13) has, below the axis (18), an extension (19) which interacts with a run-on surface (12) on the pivotably mounted (10) coupling shell (9).

10. Trailer coupling according to one of the preceding claims, **characterized in that** the coupling lever (13) has a lock (20) against unintentional opening.

11. Trailer coupling according to one of the preceding claims, **characterized in that** the coupling lever (13) and the spring-loaded coupling shell (9) can be latched together in the open position of the trailer coupling (1).

12. Trailer coupling according to one of the preceding claims, **characterized in that** the coupling shell (9) has a lug (11) which interacts with a latching opening (21) on the coupling lever (13) in the open position.

## Revendications

1. Attelage comprenant un boîtier d'accouplement (3), un levier d'accouplement pivotant (13) et un indicateur (2) de l'usure de l'accouplement, le levier d'accouplement (13), pénétrant à travers une ouverture de boîtier (6) au niveau du côté supérieur du boîtier d'accouplement (3), venant en contact avec une coque d'accouplement (9) et ouvrant et fermant l'attelage (1) en sollicitant cette dernière, **caractérisé en ce que** l'indicateur (2) présente un support d'indicateur (23) connecté au levier d'accouplement (13) et entraîné avec celui-ci lors de ses mouvements de pivotement, lequel est disposé dans la région de l'ouverture de boîtier (6), le support d'indicateur (23) étant réalisé sous forme de pièce courbe (24) qui est disposée au niveau du côté arrière (14) d'une tige de levier (16) dans la région de l'axe (18) du levier d'accouplement (13).

2. Attelage selon la revendication 1, **caractérisé en ce que** le support d'indicateur (23) porte un ou plusieurs éléments indicateurs (26, 27, 28, 29) qui signalent le degré d'usure et/ou la position d'ouverture de l'attelage (1).

3. Attelage selon la revendication 1 ou 2, **caractérisé en ce que** le support d'indicateur (23), lorsque l'attelage (1) est correctement fermé, pénètre au moins en partie à travers l'ouverture de boîtier (6).

4. Attelage selon la revendication 1, 2 ou 3, **caractérisé en ce que** les éléments indicateurs (26, 27, 28, 29) sont réalisés différemment et/ou ont des significations différentes.

5. Attelage selon l'une quelconque des revendications précédentes, **caractérisé en ce que** le support d'indicateur (23) coopère avec le bord (34) de l'ouverture de boîtier (6), un ou plusieurs éléments indicateurs (26, 27, 28, 29) étant visibles en fonction de la position de rotation du levier d'accouplement (13).

6. Attelage selon l'une quelconque des revendications précédentes, **caractérisé en ce que** le support d'indicateur (23) est entouré étroitement par une région d'ouverture arrière (32), l'ouverture de boîtier (6), en particulier une région d'ouverture arrière (32), présentant un rebord redressé (33).

7. Attelage selon l'une quelconque des revendications précédentes, **caractérisé en ce que** le support d'indicateur (23) est courbé au moins en partie de manière concentrique à l'axe (18) du levier d'accouplement (13), la région courbe (25) avec les éléments indicateurs (26, 27, 28, 29) étant notamment courbée de manière concentrique à l'axe (18) du levier d'accouplement (13).

8. Attelage selon l'une quelconque des revendications précédentes, **caractérisé en ce que** le support d'indicateur (23) présente une forme de coque fermée latéralement et s'applique contre le côté arrière du levier (14).

9. Attelage selon l'une quelconque des revendications précédentes, **caractérisé en ce que** le levier d'accouplement (13) présente en dessous de l'axe (18) une saillie (19) qui coopère avec une surface de montée (12) sur la coque d'accouplement (9) supportée de manière pivotante (10).

10. Attelage selon l'une quelconque des revendications précédentes, **caractérisé en ce que** le levier d'accouplement (13) présente un verrouillage (20) pour empêcher une ouverture accidentelle.

11. Attelage selon l'une quelconque des revendications précédentes, **caractérisé en ce que** le levier d'accouplement (13) et la coque d'accouplement (9) sollicitée par ressort peuvent être encliquetés dans la position d'ouverture de l'attelage (1).

12. Attelage selon l'une quelconque des revendications précédentes, **caractérisé en ce que** la coque d'accouplement (9) présente une pièce rapportée (11) qui, dans la position d'ouverture, coopère avec une ouverture d'encliquetage (21) sur le levier d'accouplement (13).
